# EUROPEAN PATENT APPLICATION

(11) **EP 4 556 418 A1**
(43) Date of publication of application: **21.05.2025**
(21) Application number: 23851490.5
(22) Date of filing: 30.06.2023
(51) Int. Cl.: B65H 23/032, B65H 26/00

(54) **DEVICE CONTROL METHOD AND APPARATUS, AND CONTROLLER, ELECTRONIC DEVICE AND DEVICE CONTROL SYSTEM**

(30) Priority: 11.08.2022 CN 202210961590
(71) Applicant: Contemporary Amperex Technology Co., Limited, Ningde, Fujian 352100 (CN)
(72) Inventor: ZHANG, Hongjun, Ningde, Fujian 352100 (CN)
(74) Representative: Frick, Robert
(86) International application number: PCT/CN2023/105091
(87) International publication number: WO 2024/032263

(57) **Abstract**

This application provides a device control method and apparatus, a controller, an electronic device, and a device control system. The method is applied to a first controller and the method includes: receiving a first detection signal sent by an upper-level computer, the first detection signal being a signal obtained by the upper-level computer upon detecting quality of a target material strip; determining a to-be-marked position on the target material strip based on the first detection signal; controlling a marker to set a mark at the to-be-marked position on the target material strip; receiving a second detection signal sent by the upper-level computer, the second detection signal being a signal obtained by the upper-level computer upon detecting a position of the target material strip; determining a deviation correction position on the target material strip based on the second detection signal; and controlling a deviation corrector to adjust the deviation correction position on the target material strip. This can improve the marking accuracy and reduce marking delays.

## Description

### CROSS-REFERENCE TO RELATED APPLICATIONS

This application claims priority to Chinese patent application CN 202210961590.9, filed on August 11, 2022 and entitled "DEVICE CONTROL METHOD AND APPARATUS, CONTROLLER, ELECTRONIC DEVICE, AND DEVICE CONTROL SYSTEM, which is incorporated herein by reference in its entirety.

### TECHNICAL FIELD

This application relates to the technical field of battery production, specifically to a device control method and apparatus, a controller, an electronic device, and a device control system.

### BACKGROUND

Currently, in the battery production process, before an electrode plate material strip is wound into a cell, it is subjected to multiple processing procedures, and in each processing procedure, some inspection procedures are performed to ensure that produced cells better meet requirements.

In the inspection procedure, if the electrode plate material strip is detected to have a problem, it can be marked. However, the existing marking methods are low in efficiency and have some delays.

### SUMMARY

In view of this, an objective of embodiments of this application is to provide a device control method and apparatus, a controller, an electronic device, and a device control system, to alleviate the problem of marking delay of the electrode plate material strip.

According to a first aspect, an embodiment of this application provides a device control method applied to a first controller. The method includes: receiving a first detection signal sent by an upper-level computer, the first detection signal being a signal obtained by the upper-level computer upon detecting quality of a target material strip; determining a to-be-marked position on the target material strip based on the first detection signal; controlling a marker to set a mark at the to-be-marked position on the target material strip; receiving a second detection signal sent by the upper-level computer, the second detection signal being a signal obtained by the upper-level computer upon detecting a position of the target material strip; determining a deviation correction position on the target material strip based on the second detection signal; and controlling a deviation corrector to adjust the deviation correction position on the target material strip.

In an optional embodiment, the controlling a marker to set a mark at the to-be-marked position on the target material strip includes: obtaining first movement data of a conveying mechanism that controls movement of the target material strip; determining, based on the first movement data, whether the to-be-marked position on the target material strip moves to a marking position of the marker; and in response to the movement of the to-be-marked position of the target material strip to the marking position of the marker, controlling the marker to set the mark at the to-be-marked position on the target material strip.

In an optional embodiment, a driving assembly of the conveying mechanism is a servo motor; and the first movement data of the conveying mechanism includes encoding data of an encoder of the servo motor; and the obtaining first movement data of a conveying mechanism that controls movement of the target material strip includes: obtaining the encoding data of the encoder of the servo motor of the conveying mechanism.

In an optional embodiment, the driving assembly of the marker is a servo motor; and the controlling the marker to set a mark at the to-be-marked position on the target material strip includes: controlling the servo motor of the marker to move, so as to drive the marker to set the mark at the to-be-marked position on the target material strip; and obtaining operation data of the servo motor of the marker.

In an optional embodiment, the controlling a deviation corrector to adjust the deviation correction position on the target material strip includes: obtaining second movement data of a conveying mechanism that controls movement of the target material strip; determining, based on the second movement data, a target deviation corrector for adjusting the deviation correction position; and controlling the target deviation corrector to adjust the deviation correction position on the target material strip.

In an optional embodiment, the controlling a deviation corrector to adjust the deviation correction position on the target material strip includes: obtaining third movement data of a conveying mechanism that controls movement of the target material strip; determining, based on the third movement data, whether the deviation correction position on the target material strip moves to a position of the deviation corrector; and in response to the movement of the deviation correction position on the target material strip to the position of the deviation corrector, controlling the deviation corrector to adjust the deviation correction position on the target material strip.

In an optional embodiment, the first controller is a programmable logic controller.

According to a second aspect, an embodiment of this application provides a detection control apparatus applied to a first controller. The apparatus includes: a first receiving module, configured to receive a first detection signal sent by an upper-level computer, the first detection signal being a signal obtained by the upper-level computer upon detecting quality of the target material strip; a first determining module, configured to determine a to-be-marked position on the target material strip based on the first detection signal; a first control module, configured to control a marker to set a mark at the to-be-marked position on the target material strip; a second receiving module, configured to receive a second detection signal sent by the upper-level computer, the second detection signal being a signal obtained by the upper-level computer upon detecting a position of the target material strip; a second determining module, configured to determine a deviation correction position on the target material strip based on the second detection signal; and a second control module, configured to control a deviation corrector to adjust the deviation correction position on the target material strip.

According to a third aspect, an embodiment of this application provides a controller, where the controller has stored thereon executable machine-readable instructions, and when the machine-readable instructions are executed, the steps of the foregoing method are performed.

According to a fourth aspect, an embodiment of this application provides an electronic device, including a processor and a memory, where the memory has stored thereon machine-readable instructions executable by the processor, and during operation of an electronic device, when the machine-readable instructions are executed by the processor, the steps of the foregoing method are executed.

According to a fifth aspect, an embodiment of this application provides a computer-readable storage medium, where the computer-readable storage medium has stored thereon a computer program, and when the computer program is run by a processor, the steps of the foregoing method are executed.

According to a sixth aspect, an embodiment of this application provides a device control system. The device control system includes: an upper-level computer and a first controller; where the upper-level computer is configured to connect to one or more external detection devices; the upper-level computer is configured to obtain detection data from each detection device related to a target material strip, determine a detection signal based on the detection data, and send the detection signal to the first controller; and the first controller is configured to implement the foregoing method based on a control signal from the upper-level computer.

In an optional embodiment, the system further includes a second controller, and the second controller is configured to control a slitting device to slit the target material strip.

The device control method and apparatus, the controller, the electronic device, and the device control system provided by the embodiments of this application can reduce marking delays using the controller that directly interacts with the upper-level computer to control the marker. Further, the first controller continues to complete the deviation correction of the target material strip. Completing the marking operation and deviation correction operation in one controller can reduce the complexity of the control systems in the battery production workshop.

To make the foregoing objectives, features, and advantages of this application clearer and more understandable, examples are given hereinafter, and the detail description is made as below with reference to the accompanying drawings.

### BRIEF DESCRIPTION OF DRAWINGS

To describe the technical solutions in embodiments of this application more clearly, the following briefly describes the accompanying drawings required for describing some embodiments. It is appreciated that the accompanying drawings below show merely some embodiments of this application and thus should not be considered as limitations on the scope. Persons of ordinary skill in the art may still derive other related drawings from the accompanying drawings without creative efforts.
FIG. 1 is a schematic diagram of interaction of a control system according to an embodiment of this application;
FIG. 2 is a schematic diagram of interaction of a device control system according to an embodiment of this application;
FIG. 3 is a schematic block diagram of a controller according to an embodiment of this application;
FIG. 4 is a flowchart of a device control method according to an embodiment of this application;
FIG. 5 is an optional flowchart of step 420 of the device control method according to an embodiment of this application;
FIG. 6 is an optional flowchart of step 450 of the device control method according to an embodiment of this application;
FIG. 7 is another optional flowchart of step 450 of the device control method according to an embodiment of this application; and
FIG. 8 is a schematic diagram of functional modules of a device control apparatus according to an embodiment of this application.

### DETAILED DESCRIPTION

The following describes the technical solutions in the embodiments of this application with reference to the accompanying drawings in the embodiments of this application.

It should be noted that similar reference numerals and letters indicate similar items in the following drawings, and therefore once an item is defined in one drawing, it does not need to be further defined or explained in the subsequent drawings. In addition, in the description of this application, the terms "first", "second", and the like are merely intended for distinctive description, and shall not be understood as an indication or implication of relative importance.

Through research by the inventor, it has been learned that in the battery production workshop, to ensure that a position of an electrode plate material strip during winding and unwinding can meet the requirements, for example, the material strip always staying at a center position of a rotating shaft without deviation, so as to complete the accurate cutting of tabs, the position of the material strip is usually monitored using an image acquisition device. For example, A CCD (charge coupled device) camera may be used to monitor the position of the electrode plate material strip in real time; and some control devices are used to perform deviation correction on the material strip in real time. In a slitting stage of the electrode plate material strip, after the slitting, the electrode plate material strip is divided into two parts, and a marking action needs to be performed at tail ends of the two strips. However, a slitting device, a marking device, a deviation correction device, and a device controlling movement of the electrode plate material strip result in complexity of various systems, because different devices need to be controlled by different control systems. However, the control of different devices also requires the use of operation data of other devices. Therefore, how to achieve an interaction method that allows for higher control efficiency of all devices and reduces control delays is a research direction.

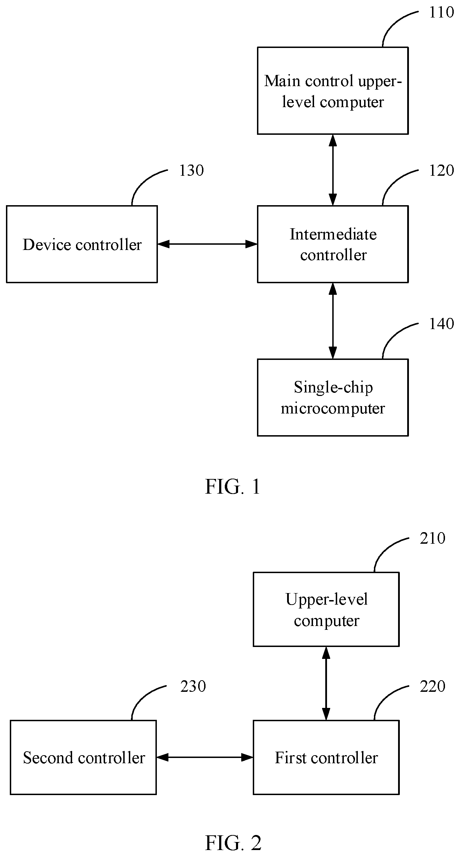

Based on the foregoing requirements, a control system is provided. As shown in FIG. 1, the control system includes a main control upper-level computer 110, an intermediate controller 120, a device controller 130, and a single-chip microcomputer 140.

The main control upper-level computer 110 may be configured to connect to various detection devices and obtain detection data from each detection device. It may also analyze the detection data from each detection device to determine, based on each analysis result, whether the electrode plate material strip needs to be processed, for example, whether the marking device and the deviation correction device need to be controlled.

The intermediate controller 120 is configured to acquire operation data of various driving devices, receive a control signal of the main control upper-level computer 110, and control the single-chip microcomputer 140. For example, if the electrode plate material strip needs to be marked, the main control upper-level computer 110 may send a detection signal to the intermediate controller 120, the intermediate controller 120 sends a control instruction to the single-chip microcomputer 140, and the single-chip microcomputer 140 controls the corresponding marking device to perform a marking operation.

The device controller 130 may be configured to control other slitting-related devices.

However, it has been known through research that in the control system, during the actual marking operation, the single-chip microcomputer 140 only passively receives relevant data of the intermediate controller 120 and controls the marking device based on the data or signal of the intermediate controller 120. Additionally, the intermediate controller 120 also needs to receive data of the main control upper-level computer 110. In the foregoing method, there is interaction among multiple control devices, and there are delays in data processing and interaction signals among the multiple control devices, which is likely to cause control instability under ultra-highspeed wire drawing.

Based on the above research, this application provides a device control method, which can improve the efficiencies of marking and deviation correction, and reduce marking delays. For example, the device control method provided in the embodiments of this application may be used in the slitting stage of the electrode plate material strip in the battery manufacturing process. The device control method in the embodiments of this application may be used for performing a deviation correction operation and a marking operation on the slit electrode plate material strip.

To facilitate understanding of the embodiments of this application, an operating environment for executing the device control method disclosed in the embodiments of this application is first introduced.

An embodiment of this application provides a device control system. As shown in FIG. 2, the device control system may include an upper-level computer 210 and a first controller 220.

The upper-level computer 210 is configured to connect to one or more external detection devices. The upper-level computer 210 may be in communication connection with the detection device configured to detect an electrode plate material strip, to obtain detection data from each detection device. The detection device may be a laser sensor configured to detect thickness data of the electrode plate material strip, or an image acquisition device configured to detect image data of the electrode plate material strip.

The first controller 220 may be connected to the upper-level computer 210. The first controller 220 may receive an instruction transmitted by the upper-level computer 210, and then the first controller 220 may control each device. The first controller is configured to implement the device control method provided in the embodiments of this application based on the control signal from the upper-level computer.

For example, the first controller 220 may be a PLC (Programmable Logic Controller, Programmable Logic Controller).

Optionally, the upper-level computer 210 may establish communication connection with the first controller 220 in a TCP (Transmission Control Protocol, transmission control protocol) bus communication mode.

In an embodiment, the device control system may be used in the slitting stage of the electrode plate material strip. The detection device connected to the upper-level computer 210 may include a device configured to detect a width of the electrode plate material strip or a device configured to detect whether a position of the electrode plate material strip deviates. The upper-level computer 210 may further be connected to the first controller 220. The upper-level computer 210 may determine, based on the detection data from each detection device, whether marking or deviation correction needs to be performed for the electrode plate material strip.

Optionally, the first controller 220 may further be configured to control other auxiliary devices in the slitting stage. For example, these auxiliary devices include a blowing device, an encoder, a pressing cylinder, or the like.

Referring again to FIG. 2, the device control system may further include a second controller 230, where the second controller 230 is configured to control the slitting device (not shown in the figure) to slit the electrode plate material strip. The slitting device may include more sub-devices, and the second controller 230 may be configured to control each sub-device in the slitting device.

For example, the second controller 230 may alternatively be a PLC controller.

Optionally, the upper-level computer 210 may also establish communication connection with the second controller 230. The upper-level computer 210 may obtain relevant data of the second controller 230 and the upper-level computer 210 may also send a detection signal and a control signal to the second controller 230.

Optionally, the upper-level computer 210 may establish communication connection with the second controller 230 in a TCP (Transmission Control Protocol, transmission control protocol) bus communication mode.

The first controller 220 may communicate with the second controller 230 in an I/O (Input/Output, Input/Output) communication mode.

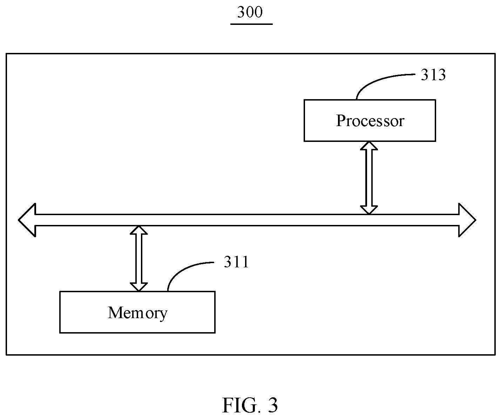

FIG. 3 is a schematic block diagram of the controller. The controller 300 may include a memory 311 and a processor 313. Those skilled in the art can understand that the structure shown in FIG. 3 is only illustrative and does not limit the structure of the controller 300. For example, the controller 300 may further include more or fewer assemblies than those shown in FIG. 3, or have a configuration different from that shown in FIG. 3.

The first controller 220 and the second controller 230 shown in FIG. 2 each may include the structure of the controller 300 shown in FIG. 3. Certainly, the first controller 220 and the second controller 230 each may further have more structures than the controller 300 shown in FIG. 3.

The memory 311 and the processor 313 are directly or indirectly electrically connected to achieve data transmission or interaction. For example, these elements may be electrically connected to each other via one or more communication buses or signal lines. The processor 313 is configured to execute an executable module stored in the memory.

The memory 311 may be, but is not limited to, a random access memory (Random Access Memory, RAM for short), a read only memory (Read Only Memory, ROM for short), a programmable read-only memory (Programmable Read-Only Memory, PROM for short), an erasable programmable read-only memory (Erasable Programmable Read-Only Memory, EPROM for short), and an electric erasable programmable read-only memory (Electric Erasable Programmable Read-Only Memory, EEPROM for short). The memory 311 is configured to store programs, and the processor 313 executes the programs upon receiving an execution instruction. The methods executed by the controller 300, as defined in any embodiment of this application, may be applied to the processor 313 or implemented by the processor 313.

The processor 313 may be an integrated circuit chip, having a signal processing capability. The processor 313 may be a general-purpose processor, including a central processing unit (Central Processing Unit, CPU for short), a network processor (Network Processor, NP for short), or the like; or may be a digital signal processor (digital signal processor, DSP for short), an application specific integrated circuit (Application Specific Integrated Circuit, ASIC for short), a field programmable gate array (FPGA), or another programmable logic device, discrete gate or transistor logic device, or a discrete hardware component, which can implement or perform the methods, steps, and logical block diagrams disclosed in the embodiments of this application. The general-purpose processor may be a microprocessor or any regular processor.

The controller 300 in this embodiment may be configured to execute various steps of the methods provided in the embodiments of this application. The implementation process of the device control method is described in detail below through several embodiments.

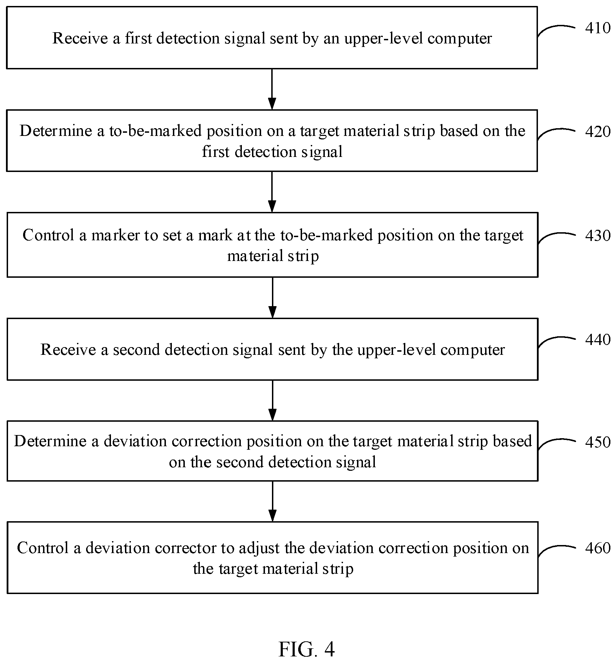

Refer to FIG. 4, which is a flowchart of the device control method according to an embodiment of this application. The method in this embodiment may be applied to a controller. For example, the first controller shown in FIG. 1 may execute the steps of the method in the embodiments of this application. The specific process shown in FIG. 4 is described in detail below.

Step 410: Receive a first detection signal sent by the upper-level computer.

The first detection signal is a command signal obtained by the upper-level computer upon detecting the quality of the target material strip. For example, the upper-level computer may obtain detection data from each detection device related to the target material strip, and then determine, based on the detection data, whether the target material strip can be marked. The first detection signal may include a marking signal for determining, based on the detection data, whether the target material strip can be marked.

The content included in the first detection signal may vary depending on different marking objectives.

The first detection signal may be used to indicate whether the first controller needs to mark the target material strip. For example, the marking signal may indicate whether the first controller needs to mark the target material strip.

In an embodiment, the marking signal of the first detection signal may be a detection pass signal or a detection fail signal. For example, the objective of marking on the target material strip is to mark a position at which the target material strip is unqualified. The marking signal of the first detection signal being a detection fail signal indicates that the target material strip can be marked. For example, the objective of marking on the target material strip may be to mark a position at which the target material strip is unqualified. The marking signal of the first detection signal being a detection fail signal indicates that marking may be performed at the position at which the target material strip is unqualified. For example, the objective of marking on the target material strip may be to mark the target material strip as a qualified material strip. The first detection signal being a detection pass signal indicates that the target material strip can be marked.

In another embodiment, the marking signal of the first detection signal may further be a signal indicating whether the target material strip can be marked. The upper-level computer may determine, based on the detection data, whether the target material strip can be marked. For example, the marking signal of the first detection signal may be a first indication signal, or the marking signal of the first detection signal may be a second indication signal. The first indication signal indicates that no marking is required, and the second indication signal indicates that marking is required. For example, the first indication signal may be signal "1", and the second indication signal may be signal "0".

Step 420: Determine a to-be-marked position on the target material strip based on the first detection signal.

The to-be-marked position may vary depending on the objective of the marking of the marker.

For example, the device control method may be used in the slitting stage of the electrode plate material strip in the battery production phase. After the slitting operation, the target material strip is divided into two parts. For example, the target material strip may be divided into a first target material strip and a second target material strip. The to-be-marked position may be a position on the first target material strip or a position on the second target material strip.

For example, the marking operation may also be to mark a position at which the target material strip is unqualified. Therefore, the to-be-marked position may be a position at which the target material strip is detected to be unqualified.

Optionally, the first detection signal may further include a position signal indicating the need for marking. The position signal is used to indicate a position that needs to be marked. The position may be a position, at which the target material strip is unqualified, requiring marking. For example, the position that needs to be marked may be at a certain distance from an end of the target material strip, and the position signal may be represented by the distance from the end of the target material strip. For example, the position signal may be indicated by a detection device. Based on the position of the detection device and the detection time, the relative position of the detection location on the target material strip may be determined when a detection result is obtained. For example, in addition to the marking signal characterizing the detection result, the first detection signal may include a position signal characterizing the position of the detection device. Based on the position of the detection device, the to-be-marked position on the target material strip that needs to be marked may be determined.

Optionally, the first detection signal may include a material strip signal indicating the need for marking, so based on the material strip signal, the material strip that needs to be marked may be determined. For example, the material strip signal may have two values. The material strip signal being a first value indicates the need to mark the first target material strip; and the material strip signal being the second value indicates the need to mark the second target material strip.

Step 430: Control a marker to set a mark at the to-be-marked position on the target material strip.

In an embodiment, the objective of the marker setting the mark is to indicate whether the material strip is qualified, and the first detection signal may include a marking signal indicating a detection result and a material strip signal obtained through detection.

For example, after the material strip enters the slitting stage, the material strip is slit into two parts. The material strip signal may be used to indicate whether the material strip that needs to be marked is the first target material strip or the second target material strip.

For example, if the currently received first detection signal is a detection signal for the first target material strip, and the first detection signal indicates qualification in the detection, marking may be performed, and the marker may be controlled to set a mark indicating qualification on the first target material strip of the target material strip. In another example, if the currently received first detection signal is a detection signal for the second target material strip, and the second detection signal indicates an anomaly in the detection, the marker may be controlled to set a mark indicating an anomaly on the first target material strip of the target material strip.

Optionally, if the entire first target material strip is detected to be qualified, the marker may set a mark indicating qualification on the first target material strip.

Optionally, segment marking may also be performed, and a mark indicating qualification or disqualification is set in each specified length region. In an example, if the length of the first target material strip is five kilometers, a mark indicating qualification or disqualification may be set every ten meters. For example, if the detection result indicates that the first target material strip from the tenth meter to the twentieth meter is qualified, a mark indicating qualification may be set at a specified position in this region. The specified position may be at the tenth meter from a starting point of this region, or at the twentieth meter from an ending point of this region. In another example, if the detection result shows that the first target material strip from the fiftieth meter to the sixtieth meter is detected to be abnormal, a mark indicating disqualification may be set at a specified position in this region.

In another embodiment, if the objective of the marker setting the mark is to record the production data of the material strip, the first detection signal may include detection data. The production data may include data such as the thickness of the target material strip and the width of the target material strip. For example, if the currently received first detection signal is a detection signal for the second target material strip, the marker may set a mark on the second target material strip, and the detection data from the second target material strip may be obtained via the mark. For example, the mark may be an identifiable barcode, QR code, string, or the like. The mark may record the production data of the second target material strip, and the production data of the second target material strip may be accessed via this mark.

To reduce the complexity of various control systems in the battery production process, more control functions may be integrated into the same controller. The first controller executes steps 440 to 460 to achieve the deviation correction of the target material strip.

Step 440: Receive a second detection signal sent by the upper-level computer.

The second detection signal is a signal determined by the upper-level computer upon detecting various positions of the target material strip.

The second detection signal may be a signal determined by the upper-level computer based on the detection data from the detection device. The detection device may be a CCD camera. Based on image data acquired by the CCD camera, whether there are deviations between various positions of the target material strip is determined.

For example, the second detection signal may include a position signal for position identification and a detection status signal. The detection status signal is used to indicate whether deviation correction is needed.

For example, multiple detection devices may be set up in the battery production workshop, and the position signal in the second detection signal may be determined based on the position of the detection device.

Step 450: Determine a deviation correction position on the target material strip based on the second detection signal.

For example, the deviation correction position on the target material strip that needs deviation correction may be determined based on the above position signal.

If this method is used in the slitting stage of the electrode plate material strip in the battery production phase, the target material strip is divided into two parts after the slitting operation. The deviation correction position may be a position on the first target material strip of the target material strip, or a position on the second target material strip of the target material strip.

Step 460: Control the deviation corrector to adjust the deviation correction position on the target material strip.

For example, the first controller may control the deviation corrector to work, so as to adjust the deviation correction position on the target material strip.

Optionally, after adjusting the deviation correction position, the detection device may also acquire an image of the deviation correction position in real time. The upper-level computer may determine whether there is a deviation at the deviation correction position based on the acquired image. If there is a deviation, the deviation of the target material strip may continue to be adjusted through steps 440 to 460.

Through the above steps, when it is necessary to mark the target material strip, the controller may directly perform marking based on the detection signal of the upper-level computer, without the need for some intermediate controllers to forward the detection signal of the upper-level computer. This can improve the efficiency of marking the target material strip and reduce marking delays. Further, the first controller continues to complete the deviation correction of the target material strip. Completing the marking operation and deviation correction operation in one controller can reduce the complexity of the control systems in the battery production workshop. Moreover, from a maintenance perspective, the maintenance difficulty can be reduced and the technical skill requirements for engineers can be lowered.

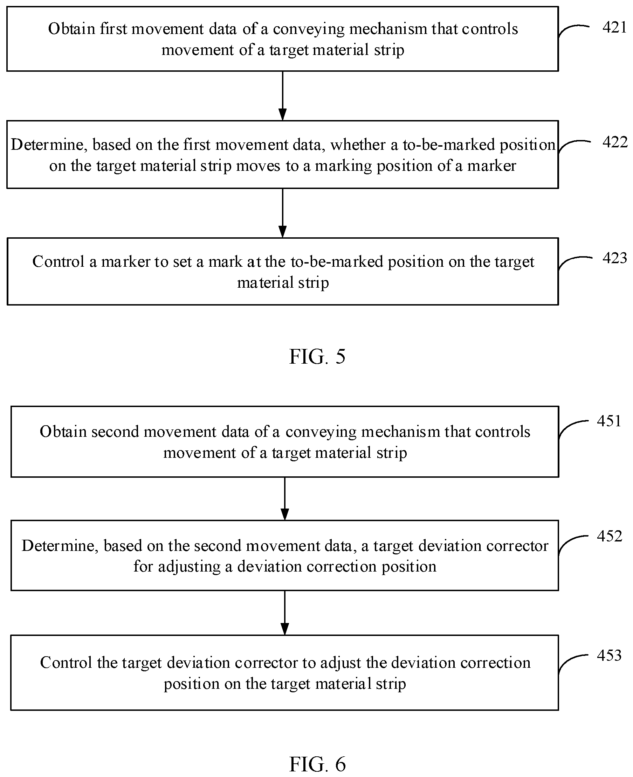

The mark set by the marker on the target material strip may be used to identify a specific position. This specific position may be determined based on the operation data of the conveying mechanism that drives the movement of the target material strip. Based on this, as shown in FIG. 5, step 420 may include the followings steps.

Step 421: Obtain first movement data of a conveying mechanism that controls movement of the target material strip.

The first movement data may be used to characterize the movement case of the conveying mechanism. Because the conveying mechanism drives the movement of the target material strip, the movement distance of the target material strip may be determined based on the movement case of the conveying mechanism.

For example, the conveying mechanism includes multiple rollers and the circumference of one roller is s0, so the roller rotating one full turn may drive the target material strip to move by s0.

Step 422: Determine, based on the first movement data, whether the to-be-marked position on the target material strip moves to a marking position of the marker.

In response to the movement of the to-be-marked position on the target material strip to the marking position of the marker, step 423 is executed.

For example, if the distance between the marking position of the marker and the to-be-marked position on the target material strip is S1, after the conveying mechanism drives the target material strip to move by S1, it may be determined that the to-be-marked position on the target material strip moves to the marking position of the marker. The distance between the marking position of the marker and the to-be-marked position on the target material strip may represent the distance by which the to-be-marked position on the target material strip needs to move to the marking position of the marker under the action of the conveying mechanism.

Step 423: Control a marker to set a mark at the to-be-marked position on the target material strip.

In an optional embodiment, a driving assembly of the conveying mechanism is a servo motor. The first movement data of the conveying mechanism includes encoding data of an encoder of the servo motor. Step 421 may include obtaining the encoding data of the encoder of the servo motor of the conveying mechanism.

Based on the encoding data, the movement case of the conveying mechanism may be determined, and based on the movement case of the conveying mechanism, the movement case of the target material strip may be determined.

In the above implementation, the movement case of the target material strip may be determined based on the encoder data, allowing for more accurate marking at a position that needs to be marked.

In an optional embodiment, to allow the controller to clearly ascertain the completion case after it has controlled the marker to complete the marking operation, the driving assembly of the marker may be a servo motor. Step 423 may include: controlling the servo motor of the marker to move, so as to drive the marker to set the mark at the to-be-marked position on the target material strip; and obtaining the operation data of the servo motor of the marker.

After the servo motor of the marker is controlled to move, the operation data of the servo motor of the marker may be also obtained. Based on this operation data, whether the marking has been completed may be determined.

After the servo motor is controlled to move, the operation data of the servo motor may be also obtained. Based on the operation data, it may be known whether the marker has completed the marking operation, thereby achieving closed-loop control and better determining the completion case of the operation.

Through the above steps, the deviation correction operation may be performed at a position with a deviation on the target material strip, allowing for more accurate subsequent operation of cutting a tab on the target material strip, and making the manufactured batteries more compliant with requirements.

In an optional embodiment, multiple positions in the battery production workshop may be all provided with deviation correctors to meet the deviation correction requirements of different positions. Based on this, the deviation corrector may be determined based on the deviation correction position to adaptively adjust the position of the material strip. As shown in FIG. 6, step 450 may include the followings steps.

Step 451: Obtain second movement data of a conveying mechanism that controls movement of the target material strip.

The real-time movement case of the target material strip may be determined based on the second movement data.

Step 452: Determine, based on the second movement data, a target deviation corrector for adjusting the deviation correction position.

Optionally, the real-time position of the deviation correction position on the target material strip may be determined based on the second movement data. The deviation corrector closest to the real-time position may be used as the target deviation corrector.

Optionally, based on the movement direction of the target material strip, the deviation corrector closest to the deviation correction position on the target material strip may also be determined as the target deviation corrector in the movement direction of the target material strip.

Step 453: Control the target deviation corrector to adjust the deviation correction position on the target material strip.

Optionally, the driving assembly of the deviation corrector may also be a servo motor. The servo motor of the target deviation corrector may be controlled to move, so as to control the target deviation corrector to adjust the deviation correction position on the target material strip. Optionally, the first controller may also obtain the operation data of the servo motor of the deviation corrector, to determine, based on the operation data, whether the target deviation corrector has completed the deviation correction operation.

Optionally, if there is a distance S2 between the position of the target deviation corrector and the deviation correction position on the target material strip, whether the target material strip has moved by S2 may be determined based on the second movement data. After the target material strip has moved S2, the target deviation corrector is controlled to adjust the deviation correction position on the target material strip.

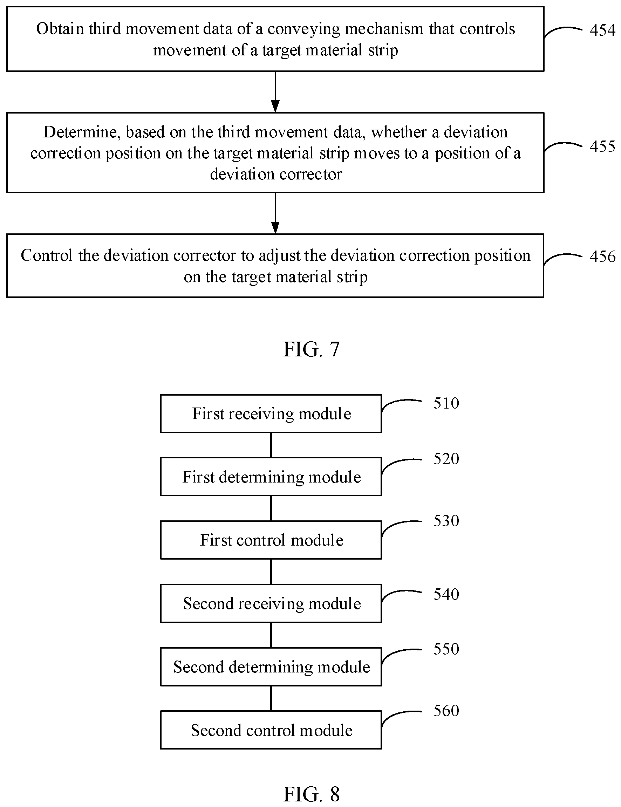

In an embodiment, the deviation corrector may be arranged at a predetermined position in the battery production workshop, so deviation correction, when needed, may be achieved by the deviation corrector at the predetermined position. Based on this, the deviation correction operation needs to be performed after the deviation correction position with a deviation moves to the predetermined position of the deviation corrector. Based on this, as shown in FIG. 7, step 450 may include the followings steps.

Step 454: Obtain third movement data of a conveying mechanism that controls movement of the target material strip.

Based on the third movement data of the conveying mechanism, the movement distance of the conveying mechanism may be known, and based on the movement distance of the conveying mechanism, the movement distance of the target material strip may be determined.

Step 455: Determine, based on the third movement data, whether the deviation correction position on the target material strip moves to a position of the deviation corrector.

For example, if the distance between the position of the deviation corrector and the deviation correction position on the target material strip is S3, after the conveying mechanism drives the target material strip to move by S3, it may be determined that the position of the deviation corrector has moved to the position of the deviation corrector. The distance S3 between the position of the deviation corrector and the deviation correction position on the target material strip may represent the distance by which the deviation correction position on the target material strip needs to move to the position of the deviation corrector under the action of the conveying mechanism.

In response to the movement of the deviation correction position on the target material strip to the position of the deviation corrector, step 456 is executed.

Step 456: Control the deviation corrector to adjust the deviation correction position on the target material strip.

Based on the movement data of the conveying mechanism, the target material strip may be located in real time. Based on the real-time position of the target material strip, deviation correction can be more accurately performed at positions with deviations. Further, the first controller directly controlling the deviation corrector can reduce the interaction requirements between various control systems, reduce deviation correction delays, and improve the deviation correction efficiency.

Further, the deviation correction control and marking control are integrated in the first controller in the device control method of this application, which can reduce the data of the control systems required in the battery production workshop, lower the complexity of workshop device control, and improve the control efficiency of various devices in the workshop.

Based on the same application concept, an embodiment of this application provides a device control apparatus corresponding to the device control method. Because the principle of resolving problems by the apparatus of this embodiment of this application is similar to that in the embodiments of the device control method described above, the implementation of the apparatus in this embodiment can refer to the description in the embodiments of the method above, and repeated parts will not be described again.

Refer to FIG. 8, which is a schematic diagram of functional modules of the device control apparatus according to an embodiment of this application. Each module in the device control apparatus in this embodiment is configured to execute the steps in the above method embodiments. Each module in the apparatus of this embodiment may operate in the controller. For example, each module in the device control apparatus may operate in the first controller shown in FIG. 1. The device control apparatus includes a first receiving module 510, a first determining module 520, a first control module 530, a second receiving module 540, a second determining module 550, and a second control module 560. The content of each module is as follows.

The first receiving module 510 is configured to receive a first detection signal sent by an upper-level computer, the first detection signal being a signal obtained by the upper-level computer upon detecting the quality of a target material strip. The first determining module 520 is configured to determine a to-be-marked position on the target material strip based on the first detection signal. The first control module 530 is configured to control a marker to set a mark at the to-be-marked position on the target material strip. The second receiving module 540 is configured to receive a second detection signal sent by the upper-level computer, the second detection signal being a signal obtained by the upper-level computer upon detecting the position of the target material strip. The second determining module 550 is configured to determine a deviation correction position on the target material strip based on the second detection signal. The second control module 560 is configured to control a deviation corrector to adjust the deviation correction position on the target material strip.

In a possible embodiment, the first control module 530 is configured to obtain first movement data of a conveying mechanism that controls movement of the target material strip; determine, based on the first movement data, whether the to-be-marked position on the target material strip moves to a marking position of the marker; and in response to the movement of the to-be-marked position of the target material strip to the marking position of the marker, control the marker to set the mark at the to-be-marked position on the target material strip.

In a possible embodiment, a driving assembly of the conveying mechanism is a servo motor; the first movement data of the conveying mechanism includes encoding data of an encoder of the servo motor; and the first control module 530 is further configured to obtain the encoding data of the encoder of the servo motor of the conveying mechanism.

In an optional embodiment, the driving assembly of the marker is a servo motor; and the first control module 530 is further configured to control the servo motor of the marker to move, so as to drive the marker to set the mark at the to-be-marked position on the target material strip; and obtain operation data of the servo motor of the marker.

In a possible embodiment, the second control module is configured to obtain second movement data of a conveying mechanism that controls movement of the target material strip; determine, based on the second movement data, a target deviation corrector for adjusting the deviation correction position; and control the target deviation corrector to adjust the deviation correction position on the target material strip.

In a possible embodiment, the second control module is configured to obtain third movement data of a conveying mechanism that controls movement of the target material strip; determine, based on the third movement data, whether the deviation correction position on the target material strip moves to a position of the deviation corrector; and in response to the movement of the deviation correction position on the target material strip to the position of the deviation corrector, control the deviation corrector to adjust the deviation correction position on the target material strip.

In a possible embodiment, the first controller is a programmable logic controller.

In addition, an embodiment of this application provides an electronic device, including a processor and a memory, where the memory has stored thereon machine-readable instructions executable by the processor, and during operation of the electronic device, when the machine-readable instructions are executed by the processor, the steps of the device control method are executed.

An embodiment of this application provides a computer-readable storage medium, where the computer-readable storage medium has stored thereon a computer program, and when the computer program is run by a processor, the steps of the device control method in the foregoing method embodiments are executed.

A computer program product of the device control method provided in the embodiments of this application includes a computer-readable storage medium storing program code. Instructions included in the program code may be used to execute the steps of the device control method described in the above method embodiments. For details, refer to the above method embodiments, which will not be elaborated herein.

In some embodiments provided in this application, it should be understood that the disclosed apparatus and method may be implemented in another manner. The apparatus embodiment described above is merely illustrative, for example, the flowcharts and block diagrams in the drawings illustrate probably implemented system architectures, functions and operations of the apparatus, method, and computer program product according to multiple embodiments of this application. On this aspect, each block in the flowcharts or the block diagrams may represent part of a module, a program segment or code, and part of the module, the program segment or the code includes one or more executable instructions configured to realize a specified logical function. It should be also noted that in some alternative implementations, the functions marked in the blocks may also be realized in a sequence different from those marked in the accompanying drawings. For example, two continuous blocks may actually be executed substantially concurrently and may also be executed in a reverse sequence sometimes, which is determined by the involved functions. It is further to be noted that each block in the block diagrams and/or the flowcharts and a combination of the blocks in the block diagrams and/or the flowcharts may be implemented by a dedicated hardware-based system configured to execute a specified function or operation or may be implemented by a combination of special hardware and a computer instruction.

In addition, each functional module in each embodiment of the application may be integrated into an independent part, each module may also independently exist, and two or more than two modules may also be integrated into an independent part.

When realized in form of software functional module and sold or used as an independent product, the function may also be stored in a computer-readable storage medium. Based on such an understanding, the technical solutions of this application substantially or parts making contributions to the conventional art or part of the technical solutions may be embodied in form of software product, and the computer software product is stored in a storage medium, including multiple instructions used to enable a computer device (which may be a personal computer, a server, a network device or the like) to execute all or part of the steps of the method in each embodiment of this application. The foregoing storage medium includes various media capable of storing program codes such as a U disk, a mobile hard disk, a read-only memory (ROM, Read-Only Memory), a random access memory (RAM, Random Access Memory), a magnetic disk, or an optical disk. It should be noted that relational terms such as "first" and "second" are only adopted to distinguish one entity or operation from another entity or operation, and are not necessarily required or implied that there is any such actual relationship or order between these entities or operations. Terms "comprise", "include", or any other variations thereof are intended to cover non-exclusive inclusions, so that processes, methods, articles or devices containing a series of elements not only contain these elements, but also contain other elements which are not clearly listed, or further contain elements which are inherent to these processes, methods, articles or devices. Without more constraints, an element preceded by "includes a..." does not preclude the presence of other identical elements in the process, method, article, or apparatus that includes the element.

The foregoing descriptions are merely preferred embodiments of this application which are not intended to limit this application. Persons skilled in the art understand that this application may have various modifications and variations. Any modification, equivalent replacement, and improvement made without departing from the spirit and principle of this application shall fall within the protection scope of this application. It should be noted that similar reference numerals and letters indicate similar items in the following drawings, and therefore once an item is defined in one drawing, it does not need to be further defined or explained in the subsequent drawings.

The foregoing content is merely specific implementations of this application, but is not intended to limit the protection scope of this application. Any variation or replacement readily figured out by a person skilled in the art within the technical scope disclosed in this application shall fall within the protection scope of this application. Therefore, the protection scope of this application shall be subjected to the protection scope of the claims.

## Claims

1. A device control method, applied to a first controller, and **characterized in that** the method comprises:
receiving a first detection signal sent by an upper-level computer, the first detection signal being a signal obtained by the upper-level computer upon detecting a target material strip;
determining a to-be-marked position on the target material strip based on the first detection signal;
controlling a marker to set a mark at the to-be-marked position on the target material strip;
receiving a second detection signal sent by the upper-level computer, the second detection signal being a signal obtained by the upper-level computer upon detecting a position of the target material strip;
determining a deviation correction position on the target material strip based on the second detection signal; and
controlling a deviation corrector to adjust the deviation correction position on the target material strip.

2. The method according to claim 1, **characterized in that** the controlling a marker to set a mark at the to-be-marked position on the target material strip comprises:
obtaining first movement data of a conveying mechanism that controls movement of the target material strip;
determining, based on the first movement data, whether the to-be-marked position on the target material strip moves to a marking position of the marker; and
in response to the movement of the to-be-marked position of the target material strip to the marking position of the marker, controlling the marker to set the mark at the to-be-marked position on the target material strip.

3. The method according to claim 2, **characterized in that** the driving assembly of a conveying mechanism is a servo motor; and the first movement data of the conveying mechanism comprises encoding data of an encoder of the servo motor; and
the obtaining first movement data of a conveying mechanism that controls movement of the target material strip comprises:
obtaining the encoding data of the encoder of the servo motor of the conveying mechanism.

4. The method according to claim 2, **characterized in that** the driving assembly of the marker is a servo motor; and
the controlling the marker to set a mark at the to-be-marked position on the target material strip comprises:
controlling the servo motor of the marker to move, so as to drive the marker to set the mark at the to-be-marked position on the target material strip; and
obtaining operation data of the servo motor of the marker.

5. The method according to claim 1, **characterized in that** the controlling a deviation corrector to adjust the deviation correction position on the target material strip comprises:
obtaining second movement data of a conveying mechanism that controls movement of the target material strip;
determining, based on the second movement data, a target deviation corrector for adjusting the deviation correction position; and
controlling the target deviation corrector to adjust the deviation correction position on the target material strip.

6. The method according to claim 1, **characterized in that** the controlling a deviation corrector to adjust the deviation correction position on the target material strip comprises:
obtaining third movement data of a conveying mechanism that controls movement of the target material strip;
determining, based on the third movement data, whether the deviation correction position on the target material strip moves to a position of the deviation corrector; and
in response to the movement of the deviation correction position on the target material strip to the position of the deviation corrector, controlling the deviation corrector to adjust the deviation correction position on the target material strip.

7. The method according to claim 1, **characterized in that** the first controller is a programmable logic controller.

8. An electronic device, **characterized by** comprising a processor and a memory, wherein the memory has stored thereon machine-readable instructions executable by the processor, and during operation of the electronic device, when the machine-readable instructions are executed by the processor, the steps of the method according to any one of claims 1 to 7 are executed.

9. A computer-readable storage medium, **characterized in that** the computer-readable storage medium has stored thereon a computer program, and when the computer program is run by a processor, the steps of the method according to any one of claims 1 to 7 are executed.

10. A device control system, **characterized in that** the device control system comprises an upper-level computer and a first controller; wherein
the upper-level computer is configured to connect to one or more external detection devices;
the upper-level computer is configured to obtain detection data from each detection device related to a target material strip, determine a detection signal based on the detection data, and send the detection signal to the first controller; and
the first controller is configured to implement the method according to any one of claims 1 to 7 based on a control signal from the upper-level computer.

11. The system according to claim 10, **characterized in that** the system further comprises a second controller, and the second controller is configured to control a slitting device to slit the target material strip.
